(19) **Europäisches Patentamt / European Patent Office / Office européen des brevets**

(11) **EP 4 609 271 B1**

(12) **EUROPEAN PATENT SPECIFICATION**

(45) Date of publication and mention
of the grant of the patent:
**15.07.2026  Bulletin 2026/29**

(21) Application number: **23798226.9**

(22) Date of filing: **27.10.2023**

(51) International Patent Classification (IPC):
**G05D 1/49** *(2024.01)*     **G05D 1/672** *(2024.01)*
**B64U 30/20** *(2023.01)*     **F16M 11/06** *(2006.01)*
**F16M 11/18** *(2006.01)*     **F16M 11/28** *(2006.01)*
**G05B 19/042** *(2006.01)*

(52) Cooperative Patent Classification (CPC):
**B64C 17/00; B64U 30/20; F16M 11/06;**
**F16M 11/18; F16M 11/28; G05B 19/042;**
**G05D 1/49; G05D 1/672;** B64U 10/13;
B64U 2101/26; F16M 2200/04; G05D 2105/89;
G05D 2109/254

(86) International application number:
**PCT/EP2023/080140**

(87) International publication number:
**WO 2024/089273 (02.05.2024 Gazette 2024/18)**

(54) **STABILISING DEVICE OF A LOAD CARRIED BY A DRONE**

STABILISIERUNGSVORRICHTUNG EINER LAST, DIE VON EINER DROHNE GEFÜHRT WIRD

DISPOSITIF DE STABILISATION D'UNE CHARGE PORTEE PAR UN DRONE

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **28.10.2022  EP 22204510**

(43) Date of publication of application:
**03.09.2025  Bulletin 2025/36**

(73) Proprietor: **DRB S.R.L.**
**20900 Monza (MB) (IT)**

(72) Inventors:
• **PIAZZA, Diego**
**20845 Sovico (MB) (IT)**
• **MENA, Giuseppe**
**25032 Chiari (BS) (IT)**

(74) Representative: **Bird & Bird Società tra Avvocati**
**S.r.l.**
**Via Porlezza, 12**
**20123 Milano (IT)**

(56) References cited:
WO-A1-2022/137227     CN-A- 111 319 765
US-A1- 2019 118 937     US-A1- 2020 011 758
US-A1- 2021 232 141     US-B2- 11 036 228

EP 4 609 271 B1

**Description**

The present invention relates in general to the control of the attitude of a load carried as cantilevered by a drone, when, in other words, the drone is in a horizontal attitude, the load is not carried by the drone along a drone vertical axis passing through its centre of gravity and therefore tends to unbalance the horizontal attitude of the drone during flight. The present invention relates, in particular, to the control of the attitude of a load carried by a drone while performing so-called NDT (i.e., non destructive testing) contact measurements, i.e., wherein the drone is used to carry a measuring instrument in flight, at an object to be measured, and to keep it in contact with that object, by exerting a fit-for-purpose pressure, while performing the measurement.

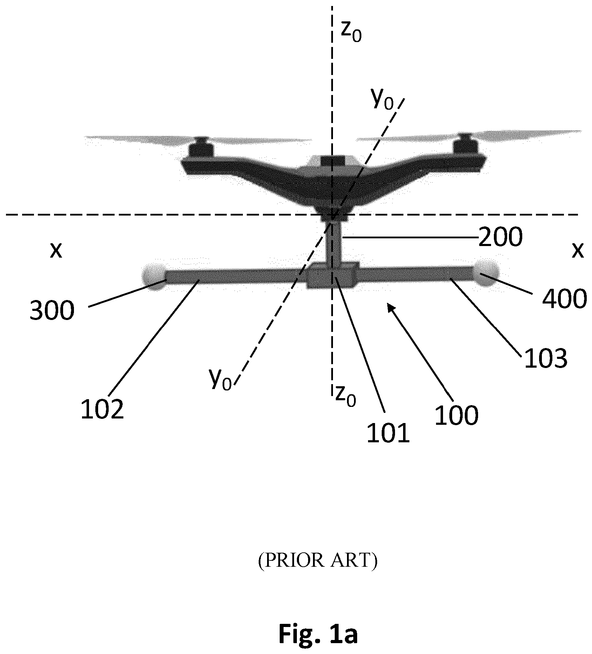

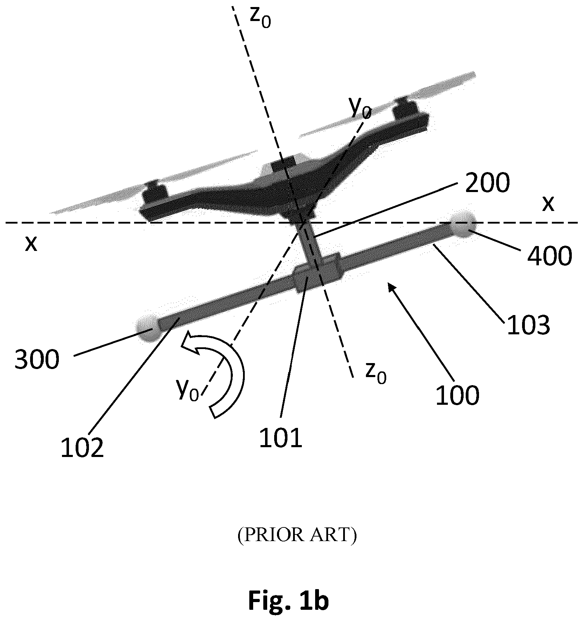

Currently, as shown in Figures 1a and 1b, the drones used in this field are equipped with a longitudinal support 100 rigidly attached below the body of the drone, e.g. by means of a joint 200 extending along a vertical axis $z_0$-$z_0$ of the drone passing through its centre of gravity. The longitudinal support 100 is mounted as cantilevered with respect to the joint 200, at a central portion 101 thereof, and carries, at one end 102 thereof, a load 300 (e.g., the measuring instrument) and, at the opposite end 103, a counterweight 400, so that the assembly formed by the joint 200, the longitudinal support 100, the load 300 and the counterweight 400 are substantially balanced when the drone is in a horizontal attitude.

With such a configuration, when the drone needs to move forward or backward along a direction horizontal to the ground, e.g. along a horizontal axis x-x represented in the aforesaid Figures, it must temporarily change its horizontal attitude by making a rotation about its transverse pitch axis $y_0$-$y_0$ which is orthogonal to both its horizontal movement axis x-x and its vertical axis $y_0$-$y_0$, and the total inertia of the system consisting of the drone, joint 200, longitudinal support 100, load 300 and counterweight 400 varies considerably, since the motion of the drone is transmitted to the load 300 and counterweight 400 rigidly attached to the drone by the joint 200 and longitudinal support 100.

Changing the horizontal attitude of the drone during its horizontal movement causes some inconveniences. First of all, it triggers a pendulum movement of the entire system, caused by the drone attitude control system, making it difficult to manoeuvre the drone and, in the case the load 300 is a measuring instrument, to use the measuring instrument itself. In addition, when the drone must keep the measuring instrument in contact with the object to be measured, and must therefore exert a pressure on that object by moving towards it, the change in the drone horizontal attitude is hindered by the constraint caused by the contact of the measuring instrument with the object, and this triggers abnormal behaviours in the drone attitude control and consequently makes it further difficult to manoeuvre it.

Besides, nowadays, drones intended for NDT measurement are products specifically configured for the type of measuring instrument they have to carry, as the longitudinal support 100 rigidly attached to the drone by the joint 200 must be correctly dimensioned together with the counterweight 400 to balance the whole system and keep it in balance. It is clear that replacing the measuring instrument 300 with another instrument of a different size and weight would cause an unbalancing of the system making it difficult, as described above, to maintain the attitude and to manoeuvre the drone.

Documents US 2021/232141 A1, US 2019/118937 A1, WO 2022/137227 A1, US 2020/011758 A1 and US 11 036 228 B2 disclose drones, load stabilisation devices for drones, and corresponding methods according to the prior art.

There is therefore a need to improve the prior art in the field of transporting loads carried as cantilevered by drones, particularly in the field of NDT measurements with drones, and the object of the present invention is to enable the aforementioned drawbacks to be solved or at least mitigated.

These and still other objects of the present invention are achieved by a stabilising device according to claim 1 and by a method of controlling the attitude of a load carried by a drone by the aforesaid stabilising device according to claim 6.

The dependent claims recite preferred and advantageous embodiments of the invention.

The present invention will now be described, for illustrative but nonlimiting purposes, according to preferred embodiments thereof, with particular reference to the enclosed figures, wherein:

Figures 1a and 1b show a schematic view of a drone for NDT measurements according to the prior art, in a horizontal attitude configuration and in an initial forward-movement configuration along a horizontal direction, respectively;

Figure 2 schematically shows a stabilising device for understanding the present invention, provided with a propulsion unit shown in a working configuration, the stabilising device being mounted on a conventional drone together with a load carried by the respective supporting arm;

Figure 3 is a schematic view, not to scale, of the stabilising device of Figure 2, wherein the propulsion unit is represented in another working configuration, and wherein the components of the resultant of the propulsive forces generated by that propulsion unit in the second working configuration are represented;

Figure 4 shows a stabilising device according to the present invention;

Figure 5 shows the stabilising device of Figure 4 and an NDT measuring device that can be connected to it, in particular a high-voltage electrical insulator meter connected to a robotic support arm; and

Figure 6 is a schematic representation of the assembly supported by a drone, comprising a load and stabilising arm according to the invention and all forces acting on the assembly.

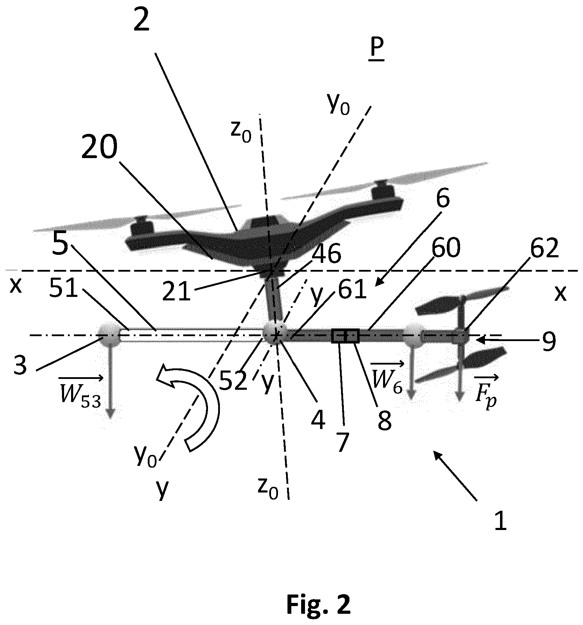

Referring in particular to the appended Figures, it may be observed that a stabilising device according to the present invention is generally referred to by number 1 and is advantageously employed to stabilise the attitude of a load 3 carried by a drone 2 along a space horizontal axis (x-x), the load 3 being mounted as cantilevered with respect to a drone vertical axis $z_0$-$z_0$ passing through its centre of gravity and thus constituting an inertial mass which tends to unbalance it during flight. The drone 2 has a lower surface 20 wherein a connection seat 21 is obtained for connecting, in a cantilevered fashion, the load 3. The connection seat 21 is typically obtained at the drone vertical axis ($z_0$-$z_0$) passing through its centre of gravity, as shown for example in Figure 2.

The stabilising device 1 of the present invention comprises at least one connecting element 4, tilting about its own transverse axis (y-y), having a load end 41 and a stabilising end 42, opposite to the load end 41. The connecting element 4 is configured to be connected to the main body of the drone 2 at its connection seat 21, and to be arranged in a tilting plane P, which passes through the drone horizontal axis (x-x) and the vertical axis ($z_0$-$z_0$), with its transverse axis (y-y) orthogonal to the tilting plane P. The tilting connecting element 4 is also configured to be rigidly attached, at its load end 41, to a corresponding attachment end 52 of a supporting arm 5, also configured to be arranged along the tilting plane (P) and supporting the load 3 at its free end 51.

The stabilising device 1 of the present invention further comprises a stabilising arm 6 rigidly attached to the tilting connecting element 4 at its stabilising end 42. Like the load 3 supporting arm 5, the stabilising arm 6 is also configured to be arranged in the tilting plane and to balance the weight of the supporting arm 5 and load 3. Obviously, the stabilising arm 6 must be configured in terms of weight and size in such a way that its weight force balances the weight force of the supporting arm 5 and load 3.

With such a configuration, the person skilled in the art will have no difficulty in understanding that, when the drone 2 moves forward along the space horizontal axis (x-x) and temporarily varies its attitude by making a rotation about its transverse pitch axis ($y_0$-$y_0$), as depicted in Figure 2, the tilting connecting element 4 rotates about its own transverse axis (y-y) by a corresponding angle, and thus reduces at least partially the impact on the drone of the inertia of the assembly formed by the supporting arm 5, load 3, connecting element 4 and stabilising arm 6. Thereby, the attitude control system of the drone 2 does not trigger the pendulum movement of the entire system described above, and the attitude of the assembly supported by the drone 2 stays substantially or nearly unchanged in its horizontal attitude.

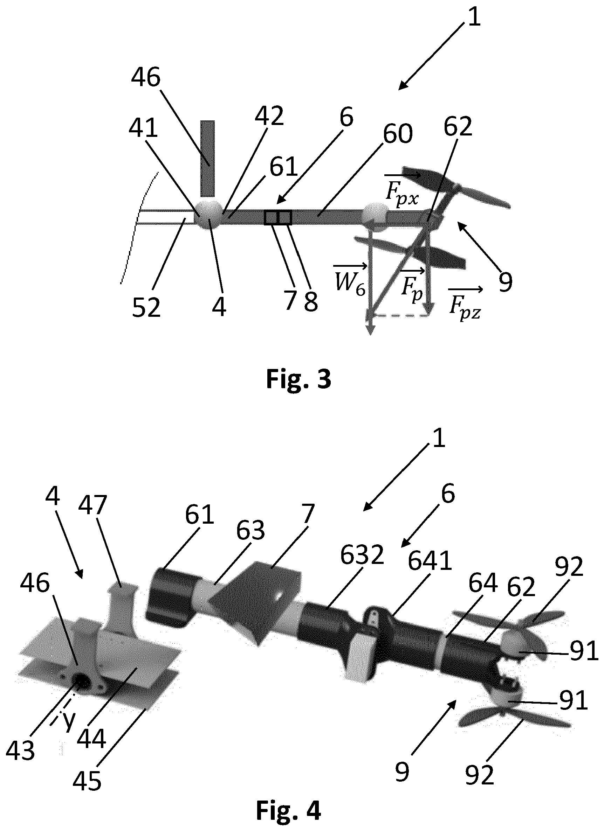

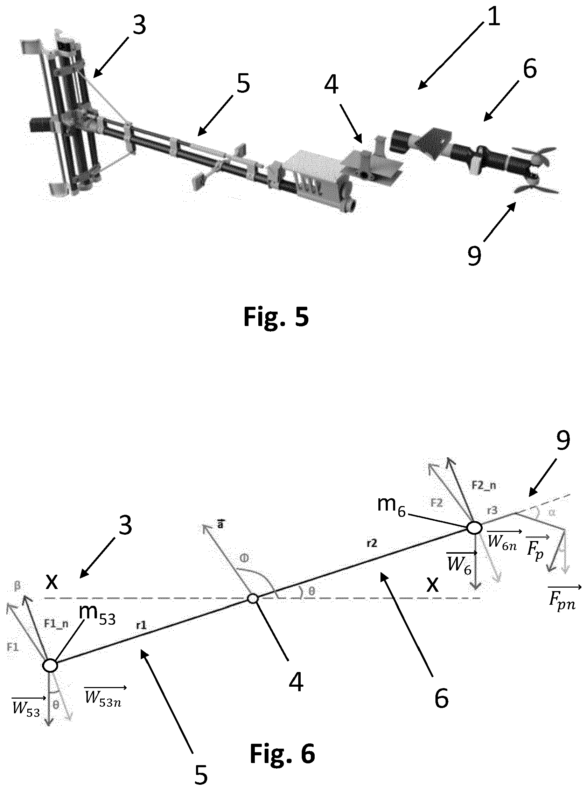

According to the invention, the stabilising device 1 also comprises a detection unit 7 (visible in Figures 4 and 5), mounted on the stabilising arm 6 and configured to detect the attitude of the stabilising arm 6 and output at least one detection signal $s_d$. According to a preferred embodiment of the invention, the detection unit 7 comprises an inertial unit or IMU provided with at least one gyroscope and three accelerometers, optionally integrated with a Kalman filter, configured to estimate the position of the stabilising arm 6 with respect to the transverse axis y-y of the tilting connecting element 4 and, consequently, the position of the whole assembly formed by the supporting arm 5, load 3, the tilting connecting element 4 and the stabilising arm 6 and provide a corresponding output detection signal $s_d$.

The stabilising device 1 of the present invention also comprises at least one control and data processing unit 8, mounted on the stabilising arm 6 and operatively connected to the detection unit 7, the control and data processing unit 8 being configured to receive and process the at least one detection signal $s_d$ and output the at least one attitude control signal $s_c$ of the stabilising arm 6 and, consequently, of the assembly formed by the supporting arm 5, load 3, tilting connecting element 4 and stabilising arm 6.

The stabilising device 1 of the present invention also comprises at least one propulsion unit 9, mounted on the stabilising arm 6 and operatively connected to the at least one control and data processing unit 8, the propulsion unit 9 being configured to receive as input the at least one control signal $s_c$ and to generate a corresponding propulsive force $\overrightarrow{F_p}$ which helps to control the attitude of the stabilising arm 6 and consequently of the assembly formed by the supporting arm 5, load 3, tilting connecting element 4 and stabilising arm 6.

According to an example of the stabilising arm 6 of the stabilising device 1, which does not fall under the scope of the invention, see in particular Figures 2 and 3, the stabilising arm 6 comprises a single longitudinal section 60, on which the detection unit 7 and the control and data processing unit 8 are mounted, the longitudinal section 60 having a first end 61 attached to the stabilising end 42 of the tilting connecting element 4, and a second end 62, on which the propulsion unit 9 is mounted by means of an articulated joint. The propulsion unit 9 is advantageously pivoted on the second end 62 of the longitudinal section 60, optionally about a pivot axis parallel to the transverse axis (y-y) of the tilting connecting element 4. According to an alternative example, which does not fall under the scope of the invention (not shown in the Figures), the propulsion unit 9 may be connected to the second end 62 of the stabilising arm 6 by means of an articulated joint, optionally spherical, and is capable of moving relative to the longitudinal section 60 of the stabilising arm 6 according to two or more degrees of freedom.

According to the invention, see in particular Figures 4 and 5, the stabilising arm 6 comprises a first section 63, having a first end 61 and a second end 632, wherein the first section 63 is attached to the stabilising end 42 of the tilting connecting element 4, at its first end 61, and supports the detection unit 7 and the control and data processing unit 8 (not shown in Figures 4 and 5). The stabilising arm 6 also comprises a second section 64, having a first end 641 and a second end 62, wherein the second section 64 is pivoted on the second end 632 of the first section 63, at its first end 641, and is configured to move relative to the first section 63 according to at least one degree of freedom, optionally about a pivot axis parallel to the transverse axis (y-y) of the tilting connecting element 4, and supports the propulsion unit 9 which is in turn pivoted or rigidly attached to the second section 64 at its second end 62 (in Figures 4 and 5, the propulsion unit 9 is shown rigidly fixed to the second end 62.

In accordance with the description above, the propulsion unit 9 may comprise at least one drive unit 91 of any suitable type, optionally a brushless servomotor, or stepper motor, and at least one propeller thruster 92 connected in any suitable manner to the at least one drive unit 91 (two drive units 91 are shown in the figures, each connected to the respective propeller thruster 92). The drive unit 91 is configured to rotate the propeller thruster 92 connected thereto in response to the control signal $s_c$, optionally a voltage control signal of the drive unit 91, transmitted by the control and data processing unit 8.

In such a configuration, when the propulsion unit 9 is controlled by the control and data processing unit 8, it may generate or vary the propulsive force $\overrightarrow{F_p}$ produced by the propulsion unit 9, which contributes, together with the weight force $\overrightarrow{W_6}$ of the stabilising arm 6, to control the attitude of the stabilising arm 6 and thus also of the load 3 attached thereto, by means of the tilting connecting element 4 and the supporting arm 5.

In this regard, Figure 6 schematically represents, purely by way of example, the assembly supported by the drone, formed by the supporting arm 5, load 3, tilting connecting element 4 and stabilising arm 6, complete with all the forces acting during the movement of the drone 2 in the horizontal direction x-x. In the centre of the Figure, an acceleration $\overrightarrow{a}$ upwards, inclined by an angle $\phi$ with respect to the horizontal axis x-x, that is due to the movement of the drone, is shown at the tilting connecting element 4. The stabilising arm 6 is assumed to be inclined by an angle $\vartheta$ relative to the same horizontal axis x-x . The Figure also shows the inertia forces $F_1$ and $F_2$ parallel to the acceleration direction, with their normal components $F_{1n}$ and $F_{2n}$. In addition, the weight forces $\overrightarrow{W_{53}}$ of the supporting arm 5 and load 3 and stabilising arm $\overrightarrow{W_6}$ with the components normal to their respective arms $\overrightarrow{W_{53n}}$ and $\overrightarrow{W_{6n}}$ are indicated. The angle $\beta$ is the angle between the normal to the axis of the respective arms and the acceleration direction a of the drone:

$$\beta = \varphi - \vartheta - \pi/2$$

Finally, the propulsive force $\overrightarrow{F_p}$ produced by the propulsion unit 9, with the normal force $\overrightarrow{F_{pn}}$ and the angle of inclination of the propulsion unit $\alpha$ about the transverse axis parallel to the pivot axis y-y of the tilting connecting element 4.

Under the conditions shown above, the torques of the forces acting with respect to the pivot axis y-y of the tilting connecting element 4 are:

$$M_{Fpn} = F_{pn}(r_2 + r_3) \cos \alpha$$

$$M_{W53n} = m_{53}gr_1 \cos \vartheta$$

$$M_{F\,1n} = m_{53}ar_1(\sin \varphi - \vartheta \cos \varphi)$$

$$M_{W6n} = m_6gr_2 \cos \vartheta$$

$$M_{F2n} = m_6ar_2 (\sin \varphi - \vartheta \cos \varphi)$$

where $g$ is the acceleration of gravity, $m_{53}$ is the total mass of the supporting arm 5 and load 3, $m_6$ is the mass of the stabilising arm 6, r1 is the length of the arm of action of the weight force, $\overrightarrow{W_{53}}$ r2 is the length of the arm of action of the weight force, $\overrightarrow{W_6}$ and r3 is the distance of the arm of action of the propulsive $\overrightarrow{F_p}$ force produced by the propulsion unit 9.

If we assume that cos $\vartheta$ = 1 *and* sin $\theta$ = $\vartheta$ for very small values of $\vartheta$ , i.e. we assume that the assembly is substantially horizontal, and if we further assume that (r2 + r3) = r2 i.e. that the second section 64 of the stabilising arm 6 has zero length, i.e., that the propulsion unit 9 is substantially connected to the second end 632 of the first section 63 of the stabilising arm 6, or that the stabilising arm 6 is made according to the example for understanding the invention and comprises only one longitudinal section 60, then the balance equation of the inertial system is:

$$M_{W53n} - M_{F1n} + M_{F2n} - M_{6n} - M_{Fpn} = m_{53}r^2\ddot{\vartheta} + m_6r^2\ddot{\vartheta}$$

which can be rewritten as

$$m_{53}\, g \frac{r1}{r2} - m_{53}\, a \frac{r1}{r2}\sin\varnothing - m_6 g + m_6 a \sin\varnothing +$$

$$\vartheta\left(m_{53}\, a \frac{r1}{r2}\cos\varnothing - m_6 a \cos\varnothing\right) - \ddot{\vartheta}\left(m_{53}\frac{r1^2}{r2} + m_{53} r2\right) = F_p \cos\alpha$$

gathered and simplified in:

$$A + B\vartheta - C\ddot{\vartheta} = F_p \cos\alpha$$

$$\ddot{\vartheta} = \left(-F_p + A + B\vartheta\right)\frac{1}{C}$$

It is possible to obtain from this equation via the Laplace transform, the transfer function of the system, in a way known to the person skilled in the art:

$$C\ddot{\vartheta} - B\vartheta = F_p - A = K_m V$$

$$\vartheta(s)(Cs^2 - B) = K_m V(s)$$

$$\frac{\vartheta(s)}{V(s)} = \frac{K_m}{s^2 - B} = \frac{\dfrac{K_m}{C}}{s^2 - \dfrac{B}{C}}$$

where the contribution $-F_p + A$ is the component of momentum independent of $\vartheta$, which instead depends on the force exerted by the propulsion system, simplified through a constant $K_m$ which multiplies the voltage $V$ applied to the propulsion unit itself.

Once the transfer function is obtained, known PID control techniques may be used to keep the stabilising arm 6 and consequently the whole assembly in a substantially horizontal attitude, for example by sending a suitable voltage control signal $s_c$ to the propulsion unit 9.

Returning to the stabilising device 1 of the present invention, according to a variant of the present invention, the stabilising arm 6 is telescopic. More specifically, the longitudinal section 60 in the example for understanding the invention is telescopic, or the first section 63 and/or the second section 62 according to the invention, as described above, is telescopic. In this case, the stabilising device 1 of the invention also comprises suitable actuator devices, not shown in the Figures, operatively connected to the control and data processing unit 8, configured to receive control signals $s_c$ from the latter and, as a response, reciprocally move the telescopic elements of the stabilising arm 6 to increase or reduce its length, as required. With such a configuration, it is by all means obvious to the person skilled in the art that by varying the length of the stabilising arm 6, it is possible to vary the torque generated by the stabilising arm 6 about the transverse axis y-y of the connecting element 4 and thus balance or contribute to balance the weight of the load 3 and supporting arm 5.

Concerning the supporting arm 6 of the stabilising device 1 of the present invention, it is represented in the Figures according to preferred embodiments thereof. For example, it is represented in Figures 4 and 5 as an assembly of two tubular sections. In any case, the person skilled in the art will have no difficulty in understanding how the stabilising arm can have any other fit-for-purpose configuration. For example, it could be configured as an extensible lattice structure, or it could be made of a profile, or it could be tubular with a polygonal cross-section, e.g. square or rectangular, or it could have any other suitable shape, as long as it is capable of supporting the components of the stabilising device 1 mounted thereon and balancing the load carried on the supporting arm 5.

Regarding the tilting connecting element 4, according to a preferred embodiment of the invention depicted in Figures 4 and 5 this comprises a central pivot 43, arranged along the transverse axis (y-y) and a pair of plates (44, 45), attached on said central pivot 43, parallel to each other. In this case, the load end 41 comprises one plate of the pair, e.g. plate 45, and the stabilising end 42 comprises the other plate 44 of the pair. Suitable openings or through-holes are obtained in these plates, which allow to attach, e.g. by bolts or any other suitable means, the supporting arm 5 of the load 3 and stabilising arm 6 respectively. The tilting connecting element 4 also comprises a pair of connecting brackets (46, 47), each bracket being, on the one hand, pivoted on the central pivot 43 and, on the other hand, configured to be connected to the main body of the drone 2, at the connection seat 21. In the Figures shown, the connecting brackets are directly connected to the drone 2 at its connection seat 21. In any case, when it is necessary to maintain a certain distance between the lower surface 20 of the drone 2 and the tilting connecting element 4, for example in order to avoid that during use the supporting arm 5 of the load 3 may interfere with the propellers of the drone 2, the brackets 46 and 47 may be connected to the drone indirectly, i.e. they may be connected to a free end of a joint rigidly attached to the drone 2 at its connection seat 21, arranged along the vertical axis $z_0$-$z_0$ of the drone passing through its centre of gravity (e.g. like the joint 200 shown in Figures 1a and 1b).

The stabilising device 1 of the present invention further comprises, according to a preferred variant, also an I/O unit, operatively connected to the detection unit 7 and the control and data processing unit 8 and configured to transmit outwardly, optionally to the drone 2 or other remote device (not shown in the Figures), at least the detection signal $s_d$ , detected by the detection unit 7. As it will be observed, although the stabilising device 1 is completely autonomous from the drone to which it may be connected, under certain circumstances it may be useful to transfer information between the stabilising arm 6 and the drone 2, more specifically to an attitude control board of the drone 2, for example by radio or cable, while performing an NDT measurement using a measuring instrument 3, when the measuring instrument is in contact with the object to be measured and the control of the attitude of the entire system is required.

The stabilising device 1 described above may thus be advantageously employed to implement a method of controlling the attitude of a load carried by a drone, which is also a specific object of the present invention.

Such a method is advantageously implemented when a drone 2, e.g. of the conventional type, carries a cantilevered load 3 (as explained above) along a space horizontal direction and wherein the above-described stabilising device 1 is connected to the drone 2, which additionally supports, at the tilting connecting element 4, a supporting arm 5, with a load 3 attached to the free end 51 of the supporting arm 5. Such a method comprises an initial step wherein, by means of the detection unit 7, the attitude of the stabilising arm 6 is detected and at least a corresponding detection signal $s_d$ is output. Thus, the method comprises a subsequent step wherein the at least one detection signal $s_d$ is received via the control and data processing unit 8, processed for example as described above, and a corresponding at least one control signal $s_c$ is output to control the attitude of the stabilising arm 6, and thus also of the load 3 attached thereto, via the tilting connecting element 4 and the supporting arm 5. Subsequently, the method comprises a step wherein the propulsion unit 9 receives the control $s_c$ signal and generates or modifies, on the basis of the control signal $s_c$ received, a corresponding propulsive force $\overrightarrow{F_p}$ which helps to control the attitude of the stabilising arm 6 and, as mentioned above, also of the load 3 attached thereto, by means of the tilting connecting element 4 and the supporting arm 5.

More specifically, to generate or vary the $\overrightarrow{F_p}$ propulsive force produced by the propulsion unit 9, according to the method of the invention, it is possible to:

- vary the angular position of the propulsion unit 9 relative to the longitudinal section 60, when the stabilising arm 6 is configured according to the first embodiment described above (i.e. it is possible to control a rotation of the propulsion unit 9 about its pivot axis parallel to the axis y-y of the tilting connecting element 4), or
- vary the mutual position of the second section 64 of the stabilising arm 6 relative to the first section 63 and/or the angular position of the propulsion unit 9 relative to the second section 64, when the stabilising arm 6 is configured according to the second embodiment described above.

Alternatively or additionally, the power developed by the propulsion unit 9 may also be varied via its drive units 91.

According to another preferred embodiment, when the stabilising device 1 is provided with a telescopic stabilising arm 6 and corresponding actuator devices, the method of the invention further comprises a step wherein the actuator devices receive as input at least one control signal $s_c$ output by the control and data processing unit 8 and, based on the received signal, vary the length of the stabilising arm 6.

In light of the above, the advantages offered by the present invention are obvious. Firstly, thanks to the tilting connecting element 4, the impact of the inertia of the assembly formed by the supporting arm 5, load 3, connecting element 4 and stabilising arm 6 on the drone 2 is reduced, consequently avoiding or greatly reducing triggering the pendulum movement of the system, caused by the attitude control system of the drone 2, thus resulting in improved drone manoeuvrability and, in case the supported load 3 is a measuring instrument, in a reduction in the difficulty of using the measuring instrument itself.

Furthermore, thanks to the stabilising arm 6 described above, when the drone needs to keep the measuring instrument in contact with the object to be measured, and therefore needs to exert pressure on this object by moving towards it, the drone 2 will only have to maintain its position close to the object to be measured. The pressure to be exerted on the object will be developed by means of a suitable control signal sent to the propulsion unit 9, which, based on its position and the power developed, will be able to generate a propulsive force $\overrightarrow{F_p}$ with a desired horizontal component, sufficient to exert the pressure required to perform the measurement on the object. In Figure 3 it can in fact be observed that the propulsion unit 9, while rotating about its own transverse pivot axis, which is parallel to the pivot axis y-y of the tilting connecting element 4, may also exert a force from the horizontal component $\overrightarrow{F_{px}}$. Besides, the stabilising arm 6 of the present invention may be easily mounted by means of the tilting connecting element 4 or by means of a vertical joint suitable for a drone 2 of the conventional type, and thanks to the propulsion unit 9 and the fact that it is optionally telescopic, it may stabilise any type of load 3 by connecting it to a respective supporting arm 5, which in turn is attached to the tilting connecting element 4.

The preferred embodiments and possible variants of the present invention have been outlined above, but it is to be understood that the persons skilled in the art may make modifications and changes without departing from the scope of protection, as defined in the attached claims.

**Claims**

1. A stabilising device (1) for stabilising the attitude of a load (3) carried by a drone (2) along a space horizontal axis (x-x), the drone having a lower surface (20) wherein a connection seat (21) is obtained at a drone vertical axis ($z_0$-$z_0$) passing through its centre of gravity, the stabilising device (1) comprising:

   - a tilting connecting element (4), configured to tilt about its own transverse axis (y-y), having a load end (41) and a stabilising end (42), opposite the load end (41), and configured:

      to be connected to the drone at the drone (2) connection seat (21), and to be arranged in a tilting plane (P), passing through the space horizontal axis (x-x) and the vertical axis ($z_0$-$z_0$) of the drone, with its transverse axis (y-y) orthogonal to the tilting plane (P); and
      to be rigidly attached, at its load end (41), to a corresponding attachment end (52) of a load (3) supporting arm (5), also arranged along the tilting plane (P), the load (3) being mounted on the load supporting arm (5) at the free end (51) of the load supporting arm (5); and

   - a stabilising arm (6), rigidly attached to the tilting connecting element (4) at its stabilising end (42), arranged in the tilting plane (P) and configured to balance the weight of the supporting arm (5) and the load (3);
   whereby, when the stabilising device (1) is connected to the drone (2), and is also connected to the load (3) by means of the supporting arm (5), and the drone moves forward along the horizontal axis (x-x) and varies its attitude by making a rotation about its own pitch axis ($y_0$-$y_0$), the tilting connecting element (4) rotates about its own transverse axis (y-y) by a corresponding angle while maintaining substantially unchanged the attitude of the stabilising arm (6) and thus also of the load (3) attached thereto, by means of the tilting connecting element (4) and the supporting arm (5),
   **characterized in that** the stabilising device (1) comprises:

      - a detection unit (7), mounted on the stabilising arm (6) and configured to detect the attitude of the stabilising arm (6) and output at least one detection signal $s_d$;
      - at least a control and data processing unit (8), mounted on the stabilising arm (6) and operatively connected to the detection unit (7), the control and data processing unit (8) being configured to receive and process the at least one detection signal $s_d$ and to output at least one control signal $s_c$ for controlling the set-up of the assembly formed by the supporting arm (5), load (3), tilting connecting element (4) and stabilising arm (6);
      - at least one propulsion unit (9), mounted on the at least one stabilising arm (6) and operatively connected to the at least one control and data processing unit (8), the propulsion unit (9) being configured to receive as input the at least one control signal $s_c$ and to generate a corresponding propulsive force ($\overrightarrow{F_p}$) which helps to control the attitude of the stabilising arm (6) and thus of the assembly formed by the supporting arm (5), load (3), tilting connecting element (4) and stabilising arm (6),

   wherein the stabilizing arm (6) comprises:

      - a first section (63) having a first (61) end and a second (632) end, the first section (63) being attached to the stabilising end (42) of the tilting connecting element (4), at its first end (61), and supporting the detection unit (7) and the control and data processing unit (8); and
      - a second section (64), having a first end (641) and a second end (62), the second (64) section being articulated on the second end (632) of the first section (63), at its first end (641), and configured to move relative to the first section (63) according to at least one degree of freedom optionally pivoted about a pivot axis parallel to the transverse axis (y-y) of the tilting connection element (4) and supporting the propulsion unit (9) at its second end (62).

2. The stabilising device (1) according to claim 1, wherein the propulsion unit (9) comprises at least one drive unit (91) and at least one propeller thruster (92) connected to the at least one drive unit (91), the at least one drive unit (91) being configured to rotate the propeller thruster (92), in response to the control signal $s_c$ transmitted by the control and data processing unit (8).

3. The stabilising device (1) according to any one of the preceding claims, wherein the stabilising arm (6) is telescopic and the stabilising device 1 of the invention also comprises suitable actuator devices, operatively connected to the control and data processing unit (8) and configured to receive control signals $s_c$ output by it and, in response, reciprocally move the telescopic elements of the stabilising arm (6) to increase or decrease the length thereof.

4. The stabilising device (1) according to any one of the preceding claims, wherein the tilting connecting element (4) comprises:

- a central pivot (43), arranged along the transverse axis (y-y);
- a pair of plates (44, 45), attached about said central pivot (43), arranged parallel to each other, the load end (41) comprising one plate (45) of the pair of plates and the stabilising end (42) comprising the other plate (44) of the pair of plates; and
- a pair of connecting brackets (46, 47), each bracket being pivoted on one side to the central pivot (43) and, on the other side, configured to be directly or indirectly connected to the drone (2), at the connection seat (21).

5. The stabilising device (1) according to any one of the preceding claims, comprising an I/O unit, operatively connected to the detection unit (7) and the control and data processing unit (8) and configured to transmit outwardly, optionally to the drone (2) or another remote device, at least the detection signal $s_d$, detected by the detection unit (7).

6. A method for controlling the attitude of a load (3) carried as cantilevered by a drone (2) along a space horizontal axis (x-x), wherein the drone comprises a lower surface (20) wherein a connection seat (21) is formed, at a vertical axis ($z_0$-$z_0$) of the drone (2) passing through its centre of gravity,
**characterized in that** the drone (2) is connected to a stabilising device (1) according to any one of the preceding claims, wherein the stabilising device (1) also carries, at the tilting connecting element (4), a load supporting arm (5) rigidly attached thereto and the load (3), mounted on the free end of the load supporting arm (5), the method comprising:

- detecting, by means of the detection unit (7), the attitude of the stabilising arm (6) and output at least one detection signal $s_d$;
- receiving, from the control and data processing unit (8), the at least one detection signal $s_d$, processing that signal and outputting at least one attitude control signal $s_c$ of the stabilising arm (6) and of the assembly formed by supporting arm (5), load (3), tilting connecting element (4) and stabilising arm (6);
- receiving as input, from the propulsion unit (9), the at least one control signal $s_c$ and generating or varying, on the basis of this at least one control signal $s_c$ received, a corresponding propulsive force ($\vec{F_p}$) which contributes to control the attitude of the stabilising arm (6) and thus also of the load (3) attached thereto, by means of the tilting connecting element (4) and the supporting arm (5).

7. The method according to the preceding claim, wherein generating or varying the propulsive force ($\vec{F_p}$) includes:

- varying the angular position of the propulsion unit (9), about its pivot axis, parallel to the transverse axis (y-y) of the tilting connecting element (4); and/or
- varying the power developed by the propulsion unit (9).

8. The method according to claim 6 or 7, when the stabilising device (1) is made according to claim 3, further comprising receiving as input, from the actuator devices, the at least one control signal $s_c$ and, on the basis of said at least one control signal $s_c$ received, varying the length of the stabilising arm (6).

**Patentansprüche**

1. Stabilisierungsvorrichtung (1) zum Stabilisieren der Lage einer Last (3), die von einer Drohne (2) entlang einer horizontalen Raumachse (x-x) getragen wird, wobei die Drohne eine untere Fläche (20) aufweist, wobei ein Verbindungssitz (21) an einer vertikalen Drohnenachse ($z_0$-$z_0$) erhalten wird, die durch ihren Schwerpunkt verläuft, wobei die Stabilisierungsvorrichtung (1) Folgendes umfasst:

- ein kippbares Verbindungselement (4), das dazu konfiguriert ist, um seine eigene Querachse (y-y) zu kippen, mit einem Lastende (41) und einem Stabilisierungsende (42), das dem Lastende (41) gegenüberliegt, und dazu konfiguriert ist:

am Verbindungssitz (21) der Drohne (2) mit der Drohne verbunden zu werden und in einer Kippebene (P) angeordnet zu werden, die durch die horizontale Raumachse (x-x) und die vertikale Achse ($z_0$-$z_0$) der Drohne verläuft, wobei ihre Querachse (y-y) orthogonal zur Kippebene (P) verläuft; und
starr an ihrem Lastende (41) an einem entsprechenden Befestigungsende (52) eines Tragarms (5) einer Last (3) befestigt zu werden, der ebenfalls entlang der Kippebene (P) angeordnet ist, wobei die Last (3) auf dem Lasttragarm (5) am freien Ende (51) des Lasttragarms (5) montiert ist; und

- einen Stabilisierungsarm (6), der an seinem Stabilisierungsende (42) starr mit dem kippbaren Verbindungselement (4) befestigt ist, in der Kippebene (P) angeordnet und konfiguriert ist, um das Gewicht des Tragarms (5) und der Last (3) auszugleichen;
wobei, wenn die Stabilisierungsvorrichtung (1) mit der Drohne (2) verbunden ist und auch mit der Last (3) mittels des Tragarms (5) verbunden ist und sich die Drohne entlang der horizontalen Achse (x-x) vorwärts bewegt und ihre Lage durch eine Drehung um ihre eigene Nickachse ($y_0$-$y_0$) ändert, sich das kippbare Verbindungselement (4) um seine eigene Querachse (y-y) um einen entsprechenden Winkel dreht, während die Lage des Stabilisierungsarms (6) und damit auch der daran befestigten Last (3) mittels des kippbaren Verbindungselements (4) und des Tragarms (5) im Wesentlichen unverändert beibehalten wird,
**dadurch gekennzeichnet, dass** die Stabilisierungsvorrichtung (1) umfasst:

- eine Erfassungseinheit (7), die auf dem Stabilisierungsarm (6) montiert und konfiguriert ist, um die Lage des Stabilisierungsarms (6) zu erfassen und mindestens ein Erfassungssignal $s_d$ auszugeben;
- mindestens eine Steuer- und Datenverarbeitungseinheit (8), die auf dem Stabilisierungsarm (6) montiert und mit der Erfassungseinheit (7) betriebswirksam verbunden ist, wobei die Steuer- und Datenverarbeitungseinheit (8) konfiguriert ist, um das mindestens eine Erfassungssignal $s_d$ zu empfangen und zu verarbeiten und mindestens ein Steuersignal $s_c$ zum Steuern des Aufbaus der aus dem Tragarm (5), der Last (3), dem kippbaren Verbindungselement (4) und dem Stabilisierungsarm (6) gebildeten Baugruppe auszugeben;
- mindestens eine Vortriebseinheit (9), die auf dem mindestens einen Stabilisierungsarm (6) montiert und mit der mindestens einen Steuer- und Datenverarbeitungseinheit (8) betriebswirksam verbunden ist, wobei die Vortriebseinheit (9) dazu konfiguriert ist, das mindestens eine Steuersignal $s_c$ als Eingabe zu empfangen und eine entsprechende Vortriebskraft ($\vec{F_p}$) zu erzeugen, die dabei hilft, die Lage des Stabilisierungsarms (6) und damit der aus dem Tragarm (5), der Last (3), dem kippbaren Verbindungselement (4) und dem Stabilisierungsarm (6) gebildeten Baugruppe zu steuern,

wobei der Stabilisierungsarm (6) Folgendes umfasst:

- einen ersten Abschnitt (63) mit einem ersten (61) und einem zweiten (632) Ende, wobei der erste Abschnitt (63) an seinem ersten Ende (61) am Stabilisierungsende (42) des kippbaren Verbindungselements (4) befestigt ist und die Erfassungseinheit (7) und die Steuer- und Datenverarbeitungseinheit (8) trägt; und
- einen zweiten Abschnitt (64) mit einem ersten Ende (641) und einem zweiten Ende (62), wobei der zweite Abschnitt (64) an seinem ersten Ende (641) am zweiten Ende (632) des ersten Abschnitts (63) angelenkt und dazu konfiguriert ist, sich relativ zu dem ersten Abschnitt (63) gemäß mindestens einem Freiheitsgrad zu bewegen, der optional um eine Schwenkachse parallel zu der Querachse (y-y) des kippbaren Verbindungselements (4) geschwenkt wird und die Vortriebseinheit (9) an seinem zweiten Ende (62) trägt.

2. Stabilisierungsvorrichtung (1) nach Anspruch 1, wobei die Vortriebseinheit (9) mindestens eine Antriebseinheit (91) und mindestens einen Propellerantrieb (92) umfasst, der mit der mindestens einen Antriebseinheit (91) verbunden ist, wobei die mindestens eine Antriebseinheit (91) dazu konfiguriert ist, den Propellerantrieb (92) als Reaktion auf das von der Steuer- und Datenverarbeitungseinheit (8) übertragene Steuersignal $s_c$ zu drehen.

3. Stabilisierungsvorrichtung (1) nach einem der vorhergehenden Ansprüche, wobei der Stabilisierungsarm (6) teleskopisch ist und die erfindungsgemäße Stabilisierungsvorrichtung 1 auch geeignete Aktuatorvorrichtungen umfasst, die betriebswirksam mit der Steuer- und Datenverarbeitungseinheit (8) verbunden und dazu konfiguriert sind, von ihr ausgegebene Steuersignale $s_c$ zu empfangen und als Reaktion darauf die Teleskopelemente des Stabilisierungsarms (6) hin- und herzubewegen, um deren Länge zu erhöhen oder zu verringern.

**4.** Stabilisierungsvorrichtung (1) nach einem der vorhergehenden Ansprüche, wobei das kippbare Verbindungselement (4) Folgendes umfasst:

- einen zentralen Drehzapfen (43), der entlang der Querachse (y-y) angeordnet ist;
- ein Paar von Platten (44, 45), die um den zentralen Drehzapfen (43) befestigt und parallel zueinander angeordnet sind, wobei das Lastende (41) eine Platte (45) des Paars von Platten umfasst und das Stabilisierungsende (42) die andere Platte (44) des Paars von Platten umfasst; und
- ein Paar von Verbindungshalterungen (46, 47), wobei jede Halterung auf einer Seite am zentralen Drehzapfen (43) angelenkt ist und auf der anderen Seite konfiguriert ist, um am Verbindungssitz (21) direkt oder indirekt mit der Drohne (2) verbunden zu werden.

**5.** Stabilisierungsvorrichtung (1) nach einem der vorhergehenden Ansprüche, umfassend eine E/A-Einheit, die betriebswirksam mit der Erfassungseinheit (7) und der Steuer- und Datenverarbeitungseinheit (8) verbunden ist und konfiguriert ist, um nach außen, optional an die Drohne (2) oder eine andere entfernte Vorrichtung, zumindest das Erfassungssignal $s_d$ zu übertragen, das von der Erfassungseinheit (7) erfasst wird.

**6.** Verfahren zum Steuern der Lage einer Last (3), die von einer Drohne (2) entlang einer horizontalen Raumachse (x-x) freitragend getragen wird, wobei die Drohne eine untere Fläche (20) umfasst, wobei ein Verbindungssitz (21) an einer vertikalen Achse ($z_0$-$z_0$) der Drohne (2) gebildet wird, die durch ihren Schwerpunkt verläuft, **dadurch gekennzeichnet, dass** die Drohne (2) mit einer Stabilisierungsvorrichtung (1) nach einem der vorhergehenden Ansprüche verbunden ist, wobei die Stabilisierungsvorrichtung (1) am kippbaren Verbindungselement (4) auch einen starr daran befestigten Lasttragarm (5) und die auf dem freien Ende des Lasttragarms (5) montierte Last (3) trägt, wobei das Verfahren umfasst:

- Erfassen der Lage des Stabilisierungsarms (6) mittels der Erfassungseinheit (7) und Ausgeben mindestens eines Erfassungssignals $s_d$;
- Empfangen des mindestens einen Erfassungssignals $s_d$ von der Steuer- und Datenverarbeitungseinheit (8), Verarbeiten dieses Signals und Ausgeben mindestens eines Lagesteuersignals $s_c$ des Stabilisierungsarms (6) und der aus dem Tragarm (5), der Last (3), dem kippbaren Verbindungselement (4) und dem Stabilisierungsarm (6) gebildeten Baugruppe;
- Empfangen, als Eingabe, des mindestens einen Steuersignals $s_c$ aus der Vortriebseinheit (9) und Erzeugen oder Variieren, basierend auf diesem empfangenen mindestens einen Steuersignal $s_c$, einer entsprechenden Vortriebskraft ($\overrightarrow{F_p}$), die dazu beiträgt, die Lage des Stabilisierungsarms (6) und damit auch der daran befestigten Last (3) mittels des kippbaren Verbindungselements (4) und des Tragarms (5) zu steuern.

**7.** Verfahren nach dem vorhergehenden Anspruch, wobei das Erzeugen oder Variieren der Vortriebskraft ($\overrightarrow{F_p}$) Folgendes beinhaltet:

- Variieren der Winkelposition der Vortriebseinheit (9) um ihre Schwenkachse parallel zur Querachse (y-y) des kippbaren Verbindungselements (4); und/oder
- Variieren der von der Vortriebseinheit (9) entwickelten Leistung.

**8.** Verfahren nach Anspruch 6 oder 7, wenn die Stabilisierungsvorrichtung (1) nach Anspruch 3 hergestellt ist, ferner umfassend das Empfangen, als Eingabe, des mindestens einen Steuersignals $s_c$ aus den Aktuatorvorrichtungen und Variieren der Länge des Stabilisierungsarms (6) basierend auf dem empfangenen mindestens einen Steuersignal $s_c$.

**Revendications**

**1.** Dispositif de stabilisation (1) pour stabiliser l'attitude d'une charge (3) transportée par un drone (2) le long d'un axe horizontal spatial (x-x), le drone ayant une surface inférieure (20) dans laquelle un siège de connexion (21) est obtenu au niveau d'un axe vertical du drone ($z_0$-$z_0$) passant par son centre de gravité, le dispositif de stabilisation (1) comprenant :

- un élément de liaison basculant (4), configuré pour basculer autour de son propre axe transversal (y-y), ayant une extrémité de charge (41) et une extrémité de stabilisation (42), opposée à l'extrémité de charge (41), et configuré pour :

être relié au drone au niveau du siège de connexion (21) de drone (2) et être disposé dans un plan basculant (P) passant par l'axe horizontal spatial (x-x) et l'axe vertical ($z_0$-$z_0$) du drone, son axe transversal (y-y) étant orthogonal au plan basculant (P) ; et

être fixé rigidement, au niveau de son extrémité de charge (41), à une extrémité de fixation (52) correspondante d'un bras de support (5) de charge (3), également disposé le long du plan basculant (P), la charge (3) étant montée sur le bras de support de charge (5) au niveau de l'extrémité libre (51) du bras de support de charge (5) ; et

- un bras de stabilisation (6), rigidement fixé à l'élément de liaison basculant (4) à son extrémité de stabilisation (42), disposé dans le plan basculant (P) et configuré pour équilibrer le poids du bras de support (5) et de la charge (3) ;

lorsque le dispositif de stabilisation (1) est relié au drone (2) et à la charge (3) au moyen du bras de support (5) et que le drone avance le long de l'axe horizontal (x-x) et modifie son attitude en effectuant une rotation autour de son propre axe de tangage ($y_0$-$y_0$), l'élément de liaison basculant (4) tourne autour de son propre axe transversal (y-y) d'un angle correspondant tout en maintenant sensiblement inchangée l'attitude du bras de stabilisation (6) et donc aussi de la charge (3) qui y est attachée, au moyen de l'élément de liaison basculant (4) et du bras de support (5),

**caractérisé en ce que** le dispositif de stabilisation (1) comprend :

- une unité de détection (7), montée sur le bras de stabilisation (6) et configurée pour détecter l'attitude du bras de stabilisation (6) et émettre en sortie au moins un signal de détection $s_d$ ;
- au moins une unité de commande et de traitement des données (8), montée sur le bras de stabilisation (6) et reliée de manière opérationnelle à l'unité de détection (7), l'unité de commande et de traitement des données (8) étant configurée pour recevoir et traiter l'au moins un signal de détection $s_d$ et pour émettre en sortie au moins un signal de commande $s_c$ pour commander la mise en place de l'ensemble formé par le bras de support (5), la charge (3), l'élément de liaison basculant (4) et le bras de stabilisation (6) ;
- au moins une unité de propulsion (9), montée sur l'au moins un bras de stabilisation (6) et reliée de manière opérationnelle à l'au moins une unité de commande et de traitement des données (8), l'unité de propulsion (9) étant configurée pour recevoir en entrée l'au moins un signal de commande $s_c$ et pour générer une force de propulsion ($\overrightarrow{F_p}$) correspondante qui aide à commander l'attitude du bras de stabilisation (6) et donc de l'ensemble formé par le bras de support (5), la charge (3), l'élément de liaison basculant (4) et le bras de stabilisation (6),

dans lequel le bras de stabilisation (6) comprend :

- une première section (63) ayant une première (61) extrémité et une seconde (632) extrémité, la première section (63) étant fixée à l'extrémité de stabilisation (42) de l'élément de liaison basculant (4), au niveau de sa première extrémité (61), et supportant l'unité de détection (7) et l'unité de commande et de traitement des données (8) ; et
- une seconde section (64), ayant une première extrémité (641) et une seconde extrémité (62), la seconde (64) section étant articulée sur la seconde extrémité (632) de la première section (63), au niveau de sa première extrémité (641), et configurée pour se déplacer par rapport à la première section (63) selon au moins un degré de liberté éventuellement pivoté autour d'un axe de pivotement parallèle à l'axe transversal (y-y) de l'élément de liaison basculant (4) et supportant l'unité de propulsion (9) au niveau de sa seconde extrémité (62).

2. Dispositif de stabilisation (1) selon la revendication 1, dans lequel l'unité de propulsion (9) comprend au moins une unité d'entraînement (91) et au moins un propulseur à hélice (92) relié à l'au moins une unité d'entraînement (91), l'au moins une unité d'entraînement (91) étant configurée pour faire tourner le propulseur à hélice (92), en réponse au signal de commande $s_c$ transmis par l'unité de commande et de traitement des données (8).

3. Dispositif de stabilisation (1) selon l'une quelconque des revendications précédentes, dans lequel le bras de stabilisation (6) est télescopique et le dispositif de stabilisation 1 de l'invention comprend également des dispositifs d'actionnement appropriés, reliés de manière opérationnelle à l'unité de commande et de traitement des données (8) et configurés pour recevoir des signaux de commande $s_c$ émis en sortie par celle-ci et, en réponse, déplacer réciproquement les éléments télescopiques du bras de stabilisation (6) pour en augmenter ou en diminuer la longueur.

**4.** Dispositif de stabilisation (1) selon l'une quelconque des revendications précédentes, dans lequel l'élément de liaison basculant (4) comprend :

- un pivot central (43), disposé le long de l'axe transversal (y-y) ;
- une paire de plaques (44, 45), fixées autour dudit pivot central (43), disposées parallèlement l'une à l'autre, l'extrémité de charge (41) comprenant une plaque (45) de la paire de plaques et l'extrémité de stabilisation (42) comprenant l'autre plaque (44) de la paire de plaques ; et
- une paire de supports de connexion (46, 47), chaque support étant pivoté d'un côté sur le pivot central (43) et, de l'autre côté, configuré pour être directement ou indirectement relié au drone (2), au niveau du siège de connexion (21).

**5.** Dispositif de stabilisation (1) selon l'une quelconque des revendications précédentes, comprenant une unité E/S, reliée de manière opérationnelle à l'unité de détection (7) et à l'unité de commande et de traitement des données (8) et configurée pour transmettre vers l'extérieur, éventuellement vers le drone (2) ou un autre dispositif distant, au moins le signal de détection $s_d$, détecté par l'unité de détection (7).

**6.** Procédé de commande de l'attitude d'une charge (3) portée en porte-à-faux par un drone (2) le long d'un axe horizontal spatial (x-x), dans lequel le drone comprend une surface inférieure (20) où un siège de connexion (21) est formé, sur un axe vertical ($z_0$-$z_0$) du drone (2) passant par son centre de gravité,
**caractérisé en ce que** le drone (2) est relié à un dispositif de stabilisation (1) selon l'une quelconque des revendications précédentes, dans lequel le dispositif de stabilisation (1) porte également, au niveau de l'élément de liaison basculant (4), un bras de support de charge (5) rigidement fixé à celui-ci et la charge (3), montée sur l'extrémité libre du bras de support de charge (5), le procédé consistant à :

- détecter, au moyen de l'unité de détection (7), l'attitude du bras de stabilisation (6) et émettre en sortie au moins un signal de détection $s_d$ ;
- recevoir, de l'unité de commande et de traitement des données (8), l'au moins un signal de détection $s_d$, traiter ce signal et émettre en sortie au moins un signal de commande d'attitude $s_c$ du bras de stabilisation (6) et de l'ensemble formé par le bras de support (5), la charge (3), l'élément de liaison basculant (4) et le bras de stabilisation (6) ;
- recevoir en entrée, de l'unité de propulsion (9), l'au moins un signal de commande $s_c$ et générer ou varier, sur la base de ce au moins un signal de commande $s_c$ reçu, une force de propulsion ($\overrightarrow{F_p}$) correspondante qui contribue à commander l'attitude du bras de stabilisation (6) et donc aussi de la charge (3) qui y est attachée, au moyen de l'élément de liaison basculant (4) et du bras de support (5).

**7.** Procédé selon la revendication précédente, dans laquelle la génération ou la variation de la force de propulsion ($\overrightarrow{F_p}$) comprend :

- la variation de la position angulaire de l'unité de propulsion (9) autour de son axe de pivotement, parallèle à l'axe transversal (y-y) de l'élément de liaison basculant (4) ; et/ou
- la variation de la puissance développée par l'unité de propulsion (9).

**8.** Procédé selon la revendication 6 ou 7, lorsque le dispositif de stabilisation (1) est fabriqué selon la revendication 3, comprend en outre la réception, en provenance des dispositifs d'actionnement, de l'au moins un signal de commande $s_c$ et, sur la base dudit au moins un signal de commande $s_c$ reçu, la variation de la longueur du bras de stabilisation (6).

(PRIOR ART)

**Fig. 1a**

(PRIOR ART)

**Fig. 1b**

**Fig. 2**

**Fig. 3**

**Fig. 4**

**Fig. 5**

**Fig. 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021232141 A1
- US 2019118937 A1
- WO 2022137227 A1
- US 2020011758 A1
- US 11036228 B2